# FASCICULE DE BREVET EUROPEEN

(11) **EP 1 491 511 B1**
(45) Date de publication et mention de la délivrance du brevet: **19.03.2008**
(21) Numéro de dépôt: 04291420.0
(22) Date de dépôt: 07.06.2004
(51) Int. Cl.: C03B 37/03, C03B 37/02, G02B 6/02

(54) **Système anti-PMD pour fibres optiques**
System zur Verringerung von PMD in einer optischen Faser
Anti-PMD system for optical fibres

(30) Priorité: 24.06.2003 FR 0307591
(43) Date de publication de la demande: 29.12.2004
(73) Titulaire: Draka Comteq B.V., 1083 HJ Amsterdam (NL)
(72) Inventeur: Doudag, Kamel, 78570 Andresy (FR); Lainet, Eric, 78600 Maisons Laffitte (FR)
(74) Mandataire: Blokland, Arie

(56) Documents cités:
- EP-A- 0 582 405
- EP-A- 1 013 618
- WO-A-97/26221
- GB-A- 2 127 870
- US-A- 3 762 142
- PATENT ABSTRACTS OF JAPAN vol. 2000, no. 12, 3 janvier 2001 (2001-01-03) -& JP 2000 247675 A (FUJIKURA LTD), 12 septembre 2000 (2000-09-12)
- PATENT ABSTRACTS OF JAPAN vol. 2000, no. 02, 29 février 2000 (2000-02-29) -& JP 11 302042 A (FUJIKURA LTD), 2 novembre 1999 (1999-11-02)

## Description

L'invention concerne le domaine des systèmes anti-PMD dont le but est de diminuer la PMD d'une fibre optique lors du procédé de fibrage. La PMD est la dispersion modale de polarisation (« polarization modal dispersion » en terminologie anglo-saxonne). La dispersion modale de polarisation est un inconvénient pour la fibre optique car elle entraîne une dégradation du signal se propageant dans la fibre optique. Cet inconvénient prend de plus en plus d'importance au fur et à mesure que les débits dans les réseaux de communication à fibres optiques augmentent.

Selon un premier art antérieur, il est connu d'utiliser un système anti-PMD appelé système SZ. Ce système est basé sur l'utilisation d'une poulie oscillante en rotation. Cette poulie oscillante est une poulie anti-PMD. Ce système est par exemple décrit dans le brevet européen EP 582405 incorporé ici par référence, ou encore dans le brevet européen EP 744636. Le système SZ est positionné à la base de la tour de fibrage, dans le plan de passage de la fibre optique laquelle fibre optique fait un coude au niveau de la poulie anti-PMD. Le plan de passage de la fibre optique est aussi appelé plan de fibrage. La poulie, en rotation autour de son axe de rotation, oscille également autour de l'axe vertical de fibrage lequel axe est son axe d'oscillation, et symétriquement par rapport au plan de fibrage. Des poulie en V situées avant la poulie oscillante et des doigts de guidage situés après la poulie oscillante permettent de guider la fibre optique dans le plan de fibrage. L'axe des poulies en V est immobile. L'ensemble constitué par les doigts de guidage est globalement immobile, c'est-à-dire que l'ensemble constitué par les doigts de guidage n'est ni en mouvement de translation ni en mouvement de rotation, ni en mouvement qui serait une combinaison de translation et de rotation. Les poulies en V n'ont pas non plus de mouvement de translation. Les oscillations de la poulie oscillante, alternativement de droite à gauche puis de gauche à droite, appliquent un couple de torsion sur la fibre optique qui est déjà recouverte de son revêtement secondaire. Un inconvénient de cet art antérieur est d'aboutir à des fibres optiques dont la PMD reste encore trop élevée à cause des rotations de la fibre optique sur la surface de la poulie oscillante qui sont insuffisamment contrôlées. En effet, soit lorsque l'angle entre le plan de la poulie oscillante et le plan de fibrage augmente, soit lorsque la fréquence d'oscillation de la poulie oscillante augmente, la position de la fibre optique qui roule sur la surface de la poulie oscillante n'est plus maîtrisée, car l'inertie de la fibre optique a tendance à la faire rester au centre de la poulie, au lieu de la maintenir dans le plan de fibrage de manière à augmenter l'angle entre le plan de la poulie oscillante et le plan de la fibre jusqu'à la valeur souhaitée. Cette tendance à rester sur place peut amener la fibre optique à glisser sur la surface de la poulie oscillante au lieu de rouler dessus, au niveau des extrémités de la course des oscillations de la poulie oscillante.

Selon un deuxième art antérieur, il est connu, par exemple du « Patent Abstract of Japan » JP 2000344539, d'utiliser une poulie mobile en translation comme poulie anti-PMD à la place de la poulie oscillante du premier art antérieur. Les moyens de guidage situés en amont et en aval de la poulie anti-PMD, n'ont pas de mouvement en translation. Ce deuxième art antérieur présente le même problème de contrôle insuffisant des rotations de la fibre optique sur la surface de la poulie anti-PMD à cause de l'inertie de la fibre optique. De plus, la poulie anti-PMD mobile en translation autour de son axe de rotation présente de plus l'inconvénient d'appliquer à la fibre optique une torsion décroissante avec la vitesse de fibrage pour une fréquence de translation donnée de la poulie anti-PMD, à moins de faire varier cette fréquence de translation, ce qui compliquerait nettement le système.

Selon un troisième art antérieur, il est connu d'utiliser deux poulies anti-PMD pour coincer la fibre optique entre elles et imposer l'angle entre plans de poulies et plan de fibrage, par exemple deux poulies mobiles en translation l'une par rapport à l'autre comme dans la demande de brevet américaine US2002/0026813, ou encore deux poulie oscillantes. Ce troisième art antérieur permet un contrôle adéquat de la rotation de la fibre optique à vitesses de fibrage modérées mais au prix d'inconvénients supplémentaires. Parmi ces inconvénients supplémentaires se trouvent, une mécanique compliquée et fragile du système de manière à coincer la fibre optique tout en essayant de ne pas trop l'endommager, ainsi qu'à vitesse élevée de fibrage, typiquement au-delà de 1000m/min, des problèmes soit de qualité de revêtement si la fibre optique est trop fortement coincée entre les poulies anti-PMD, soit de guidage de la fibre optique si celle-ci est trop faiblement coincée entre les poulies anti-PMD. Lesdits problèmes de guidage entraînent une diminution du temps de contact entre fibre optique et poulies anti-PMD, d'où une diminution de l'efficacité de rotation de la fibre optique sur les poulies anti-PMD, d'où une diminution du couple de torsion appliqué sur la fibre optique par les poulies anti-PMD, et par conséquent une valeur de PMD trop élevée sur la fibre optique finale, c'est-à-dire en fin de fibrage. Les problèmes de variation de diamètre de fibre optique sont très mal gérés par ce genre de système comprimant la fibre optique entre deux poulies anti-PMD, car lorsque le diamètre de la fibre optique varie, la force de compression est toujours ou bien trop élevée ou bien trop faible.

Selon un autre art antérieur, il est connu, par example du Patent Abstracts of Japan JP 2000-247675 et du Patent Abstracts of Japan JP 11-302042, d'utiliser un système anti-PMD comprenant une poulie anti-PMD sur laquelle une fibre optique est destinée à rouler et qui est rotative autour d'un axe de rotation, et des dispositifs de guidage situés de part et d'autre de la poulie, donc seulement un est mobile en translation selon une direction perpendiculaire et une direction parallèle à respectivement l'axe de rotation de la poulie.

L'invention propose un système anti-PMD amélioré, permettant à la fois, un bon contrôle de la rotation de la fibre optique sur la poulie anti-PMD obtenu par un meilleur guidage de la fibre optique au niveau de son décalage angulaire par rapport au plan de la poulie anti-PMD, une bonne qualité de revêtement de fibre optique obtenue par l'absence de compression excessive de la fibre optique, le système anti-PMD étant de plus relativement simple et robuste. Pour cela, la poulie anti-PMD a un axe de rotation fixe et un seul degré de liberté autour de cet axe qui est un degré de liberté en rotation autour de cet axe, tandis que deux dispositifs de guidage sont mobiles en translation de manière à pouvoir faire varier l'angle entre le plan de fibrage et le plan de la poulie anti-PMD en maîtrisant la rotation effective de la fibre optique sur la surface de la poulie anti-PMD. Au contraire des premier et deuxième arts antérieurs, la rotation de la fibre optique sur la surface de la poulie anti-PMD est ainsi contrôlée et maîtrisée, car l'élément responsable de la variation de l'angle entre plan de fibrage et plan de poulie anti-PMD est un élément de guidage qui contrôle par conséquent mieux le décalage angulaire entre le plan de la poulie anti-PMD et le plan de fibrage de la fibre optique. Au lieu d'un guidage selon deux axes perpendiculaires comme dans le premier art antérieur utilisant une poulie oscillante, un guidage selon un seul axe est réalisé par le biais d'un mouvement en translation du dispositif de guidage, ce qui est plus simple. L'utilisation d'une seule poulie anti-PMD évite tous les problèmes de compression de la fibre optique du troisième art antérieur, tandis que la réduction des degrés de liberté de la poulie anti-PMD entraîne une simplification et une robustesse accrues du système. Par ailleurs, au contraire du deuxième art antérieur et d'une partie du troisième art antérieur, lesquels utilisent une poulie anti-PMD mobile en translation également, le couple de torsion, qui s'exprime en tours par mètre de fibre optique, appliqué à la fibre optique est indépendant de la vitesse de fibrage. Pour une fréquence d'oscillation constante, la vitesse de rotation moyenne de la fibre optique est constante quelle que soit la vitesse de fibrage. Par contre, le profil de rotation, c'est-à-dire la répartition spatiale et le sens de rotation le long de la fibre optique, va évoluer. Tandis que pour un système de poulie en translation comme selon le deuxième art antérieur, la vitesse de rotation moyenne diminue avec la vitesse de fibrage, et le profil de rotation varie également avec la vitesse de fibrage.

Selon l'invention, il est prévu un système anti-PMD comprenant, une poulie anti-PMD sur laquelle une fibre optique est destinée à rouler et qui est rotative autour d'un axe de rotation, au moins deux dispositifs de guidage de fibre optique situés de part et d'autre de la poulie anti-PMD, l'axe de rotation de la poulie anti-PMD est fixe, et le seul degré de liberté de la poulie anti-PMD est la rotation autour de l'axe de rotation de la poulie anti-PMD, caractérisé en ce que les deux dispositifs de guidage sont mobiles en translation selon une direction de translation non orthogonale à l'axe de rotation de la poulie anti-PMD.

Selon l'invention, il est prévu de préférence un système anti-PMD dans lequel, lors du fibrage de la fibre optique, les dispositifs de guidage mobiles en translation décale angulairement la fibre optique par rapport à un plan perpendiculaire à l'axe de rotation de la poulie anti-PMD, et la poulie anti-PMD applique, alternativement dans le sens des aiguilles d'une montre et dans le sens inverse à celui des aiguilles d'une montre, un couple de torsion à la fibre optique de manière à diminuer sa PMD.

L'invention sera mieux comprise et d'autres particularités et avantages apparaîtront à l'aide de la description ci-après et des dessins joints, donnés à titre d'exemples, où :

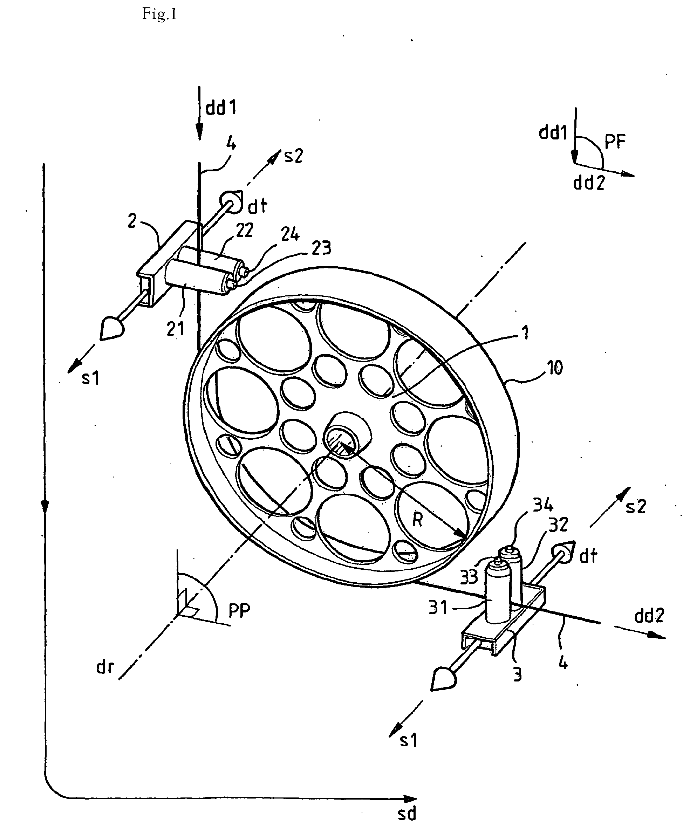

- la figure 1 représente schématiquement un exemple préférentiel de système anti-PMD selon l'invention.

Les différentes étapes de fabrication de la fibre optique lors du procédé de fibrage ont une influence importante sur les ovalités d'indice et de géométrie du coeur de la préforme et par conséquent de la fibre optique également, lesquelles ovalités sont l'une des causes d'une PMD importante. Or, les fibres optiques dont la PMD est trop importante ne peuvent pas être vendues car ladite PMD dégraderait de manière trop importante le signal optique transmis par ladite fibre optique. Lors du fibrage, la méthode utilisée pour réduire la PMD d'une fibre optique, consiste à faire tourner la fibre optique sur elle-même, alternativement dans un sens de rotation, par exemple le sens des aiguilles d'une montre, puis dans l'autre, par exemple le sens inverse à celui des aiguilles d'une montre. Le système anti-PMD, qui permet de vriller la fibre optique, situé à la base de la tour de fibrage, agit de préférence sur la fibre optique recouverte de ses deux revêtements. Le couple de torsion, appliqué à la fibre optique, est transmis jusqu'au cône de verre visqueux de la préforme, situé dans le four de fibrage, plusieurs mètres au-dessus du système anti-PMD. Le verre « mou » et vrillé qui est tiré vers le bas de la tour de fibrage par la traction du cabestan, se refroidit ensuite rapidement (c'est ce que l'on appelle la « trempe du verre »), ce qui fige dans le verre, la torsion exercée par le système anti-PMD. Dans une limite raisonnable, plus la fibre optique est vrillée alternativement dans un sens puis dans l'autre, plus la PMD de ladite fibre optique sera faible et mieux ce sera. La PMD liée à l'ovalité d'indice (ovalité d'indice de coeur dans le plan perpendiculaire à l'axe de transmission de la lumière) peut être corrigée par la torsion de la fibre optique, comme pour l'ovalité géométrique. Par contre, une PMD qui serait liée à un défaut dans le verre, ou à une variation d'indice dans l'axe longitudinal de la fibre optique, ne serait pas modifiée par le système anti-PMD.

La figure 1 représente schématiquement un exemple préférentiel de système anti-PMD selon l'invention. La flèche sd montre le sens amont-aval de défilement de la fibre optique 4 lors du fibrage. Une poulie 1 anti-PMD est rotative autour d'un axe ar de rotation. Le plan PP perpendiculaire à l'axe ar est le plan de la poulie 1 anti-PMD. La surface périphérique 10 de la poulie 1 anti-PMD est la surface sur laquelle la fibre optique 4 est destinée à rouler. La poulie 1 anti-PMD a un rayon R. De part et d'autre de la poulie 1 anti-PMD, sont situés des dispositifs 2 et 3 de guidage.

En amont de la poulie 1 anti-PMD, se trouve le dispositif 2 de guidage amont. Le dispositif 2 de guidage amont est mobile en translation suivant une direction de translation représentée par les flèches dt. Le dispositif 2 de guidage amont comprend deux doigts 21 et 22 de guidage entre lesquels passe la fibre optique 4. Afin de ne pas endommager la qualité du revêtement de la fibre optique 4, les deux doigts 21 et 22 de guidage sont mobiles en rotation respectivement autour des axes 23 et 24. Au niveau du dispositif 2 de guidage amont, la direction de défilement de la fibre optique 4 est représentée par la flèche dd 1.

En aval de la poulie 1 anti-PMD, se trouve le dispositif 3 de guidage aval. Le dispositif 3 de guidage aval est mobile en translation suivant une direction de translation représentée par les flèches dt. Le dispositif 3 de guidage aval comprend deux doigts 31 et 32 de guidage entre lesquels passe la fibre optique 4. Afin de ne pas endommager la qualité du revêtement de la fibre optique 4, les deux doigts 31 et 32 de guidage sont mobiles en rotation respectivement autour des axes 33 et 34. Au niveau du dispositif 3 de guidage aval, la direction de défilement de la fibre optique 4 est représentée par la flèche dd2.

Le plan de fibrage PF est le plan formé par les directions dd1 et dd2.

L'axe ar de rotation de la poulie 1 anti-PMD est fixe, c'est-à-dire qu'il est fixe par rapport à l'ensemble du système anti-PMD qui lui-même est fixe par rapport à la tour de fibrage au bas de laquelle se trouve le système anti-PMD. L'axe ar est fixe au contraire des arts antérieurs à poulie oscillante, où l'axe de rotation était mobile de manière à pouvoir osciller.

Le seul degré de liberté de la poulie 1 anti-PMD est la rotation autour de l'axe ar de rotation de la poulie 1 anti-PMD. La poulie 1 anti-PMD n'a pas d'autre degré de liberté dans un référentiel par rapport à l'ensemble du système anti-PMD et donc par rapport à la tour de fibrage, parmi les six degrés de liberté traditionnels, à savoir trois degrés de liberté en rotation et trois degrés de liberté en translation, la poulie 1 anti-PMD ne possède qu'un seul degré de liberté qui est un degré de liberté en rotation autour de l'axe ar. La poulie 1 anti-PMD ne possède notamment aucun degré de liberté en translation.

Les deux dispositifs de guidage 2 et 3 sont des mobiles en translation selon une direction de translation dt qui est non orthogonale à l'axe ar de rotation de la poulie 1 anti-PMD. Ainsi grâce au mouvement de translation dudites dispositifs de guidage, un décalage angulaire peut être créé entre le plan de la fibre et le plan PP de la poulie 1 anti-PMD, ce qui n'aurait pas été possible si la direction dt avait été orthogonale à l'axe ar de rotation.

De préférence, la direction de translation dt des dispositifs de guidage mobiles en translation 2 et 3 est située dans un plan parallèle à la fois à l'axe or de rotation de la poulie 1 anti-PMD et respectivement à la direction de défilement dd1 ou dd2 de la fibre optique respectivement au niveau dudites dispositifs de guidage 2 et 3 lors du fibrage de la fibre optique, selon les dispositifs de guidage qui sont mobiles en translation. Ainsi, une composante du mouvement en translation qui serait selon une direction orthogonale à l'axe ar de rotation et à la fibre optique 4, inutile pour créer ledit décalage angulaire, est supprimée.

De préférence, la direction de translation dt est parallèle à l'axe ar de rotation de la poulie 1 anti-PMD. Ainsi, une composante du mouvement en translation qui serait selon une direction parallèle à la fibre optique 4, inutile pour créer ledit décalage angulaire, est supprimée.

Les dispositifs de guidage 2 et 3, qui sont mobiles en translation, se déplace en translation suivant la direction dt de translation, alternativement dans le sens s1 puis dans le sens s2, les extrémités de sa course étant avantageusement situées de part et d'autre de la position d'équilibre de la fibre optique 4, préférentiellement à égale distance de ladite position d'équilibre de la fibre optique 4 laquelle position d'équilibre correspond à la verticale de la tour de fibrage. Sur la figure 1, la fibre optique 4 est représentée à sa position d'équilibre.

Lors du fibrage de la fibre optique 4, les dispositifs de guidage mobiles en translation décales angulairement la fibre optique 4 par rapport à un plan perpendiculaire à l'axe ar de rotation de la poulie 1 anti-PMD, ce plan perpendiculaire étant le plan PP de la poulie 1 anti-PMD. Grâce à ce décalage angulaire, et par l'intermédiaire de la vitesse de défilement de la fibre optique 4 au niveau de la poulie 1 anti-PMD, ladite poulie 1 anti-PMD applique, par l'intermédiaire du contact entre la fibre optique 4 et la surface 10 de la poulie 1 anti-PMD, alternativement dans le sens des aiguilles d'une montre et dans le sens inverse à celui des aiguilles d'une montre, un couple de torsion à la fibre optique 4 de manière à diminuer la PMD de la fibre optique 4.

Avec une poulie oscillante comme dans le premier art antérieur, le profil de torsion imprimé dans la fibre optique 4 est un profil sinusoïdal de torsion. Un profil triangulaire de torsion est meilleur qu'un profil sinusoïdal de torsion, notamment pour les fibres optiques monomodes standard et pour les fibres optiques à compensation de dispersion chromatique. Pour imprimer un profil triangulaire de torsion dans la fibre optique, il faut une commande sensiblement en créneau. Pour réaliser cette commande préférentielle sensiblement en créneau, le mouvement en translation des dispositifs de guidage mobiles en translation est beaucoup plus lent aux extrémités de la course dudit mouvement qu'au milieu de la course dudit mouvement de manière à imprimer dans la fibre optique lors du fibrage plutôt un profil triangulaire de torsion qu'un profil sinusoïdal de torsion. Idéalement, le mouvement en translation des dispositifs de guidage mobiles en translation imprimes un profil sensiblement triangulaire dans la fibre optique. Le milieu de course correspond à la position d'équilibre de la fibre optique 4.

De manière à pouvoir mieux maîtriser le profil de torsion imprimé dans la fibre optique 4, la distance, entre d'une part au moins un point de contact entre le dispositifs de guidage mobiles en translation et la fibre optique 4 et d'autre part au moins un point de contact entre la fibre optique 4 et la poulie 1 anti-PMD, est de préférence inférieure ou égale au rayon de la poulie 1 anti-PMD. En effet, si les dispositifs de guidage mobiles en translation sont disposés trop loin de la zone de contact entre la fibre optique 4 et la surface 10 de la poulie 1 anti-PMD, alors apparaissent des amortissements qui lissent le profil de torsion imprimé dans la fibre optique 4 et qui peuvent aller jusqu'à transformer un profil, à l'origine triangulaire, de torsion en un profil sinusoïdal de torsion, ce qui correspond à une dégradation du profil de torsion imprimé dans la fibre optique 4. Les dispositifs de guidage mobiles en translation sont donc de préférence placés le plus près possible de la zone de contact entre la fibre optique 4 et la surface 10 de la poulie 1 anti-PMD. A cause de la présence de la poulie 1 anti-PMD elle-même, rapprocher les dispositifs de guidage mobiles en translation, par exemple les doigts de guidage, de la zone de contact entre la fibre optique 4 et la surface 10 de la poulie 1 anti-PMD, implique de diminuer leur taille pour éviter tout contact entre les dispositifs de guidage mobiles en translation et la poulie 1 anti-PMD. De préférence, la distance, entre d'une part au moins un point de contact entre les dispositifs de guidage mobiles en translation et la fibre optique 4 et d'autre part au moins un point de contact entre la fibre optique 4 et la poulie 1 anti-PMD, est inférieure ou égale à la moitié du rayon de la poulie 1 anti-PMD. Pour qu'un tel point de contact existe, il suffit en fait que le minorant de toutes les distances, entre d'une part au moins un point de contact entre les dispositifs de guidage mobiles en translation et la fibre optique 4 et d'autre part au moins un point de contact entre la fibre optique 4 et la poulie 1 anti-PMD, soit inférieur au rayon de la poulie 1 anti-PMD.

Les dispositifs de guidage mobiles en translation peuvent comprendre par exemple une poulie en V dont l'axe de rotation est parallèle à l'axe ar de rotation de la poulie 1 anti-PMD. Cependant, lesdites dispositifs de guidage présentent une inertie importante, tout comme la poulie oscillante du premier art antérieur. Or, au fur et à mesure de l'augmentation de l'amplitude du couple de torsion, l'amplitude des mouvements des poulies augmente et leur inertie devient de plus en plus pénalisante. Afin de diminuer l'inertie des dispositifs de guidage mobiles en translation, des doigts de guidage sont utilisés à la place de la poulie en V, ces doigts de guidage présentant une inertie bien inférieure à celle d'une poulie ; les doigts de guidage sont de plus bien plus faciles à nettoyer qu'une poulie en V à gorge étroite, il suffit alors de faire tourner les doigts de guidage autour de leur axe de rotation, tandis qu'une poulie en V à gorge large, facile à nettoyer, guidera quant à elle mal la fibre optique 4. Une poulie à faces parallèles pourrait aussi être envisagée, mais elle est peu intéressante dans la mesure où elle ne maîtrise pas la composante de mouvement de la fibre optique 4 suivant une direction parallèle au diamètre de ladite poulie à faces parallèles au niveau de son point de contact avec la fibre optique 4. Par ailleurs, ce type de poulie pose des problèmes de nettoyage du fait de l'espace libre très faible existant entre ses deux faces parallèles. Donc, de préférence, les dispositifs de guidage mobiles en translation comprennent au moins deux doigts de guidage entre lesquels est destinée à passer la fibre optique 4 lors du fibrage de la fibre optique 4. Les dispositifs de guidage mobiles en translation sont le dispositif de guidage amont 2 et le dispositif de guidage aval 3. Les deux dispositifs de guidage amont 2 et aval 3 sont des dispositifs de guidage mobiles en translation. Les doigts de guidage sont avantageusement mobiles en rotation autour d'axes distincts entre eux. Par exemple dans le dispositif de guidage amont 2, les axes de rotation 23 et 24 sont parallèles entre eux mais restent distincts entre eux. De préférence, l'écartement des doigts de guidage est suffisamment important pour ne pas endommager le revêtement de la fibre optique 4 lors du fibrage de la fibre optique 4. Toutefois, cet écartement reste suffisamment faible pour maîtriser le déplacement angulaire entre le plan de la fibre optique 4 et le plan PP de la poulie 1 anti-PMD. L'écartement entre doigts de guidage, non visible sur la figure 1, est la distance libre qui sépare les doigts de guidage et dans laquelle peut passer la fibre optique 4.

L'un dispositif de guidage mobile en translation est le dispositif de guidage aval 3, c'est-à-dire le dispositif de guidage, situé en aval de la poulie 1 anti-PMD par rapport au sens de défilement dd2 de la fibre optique 4 lors du fibrage de la fibre optique 4. D'éventuelles vibrations provoquées par le mouvement de translation du dispositif de guidage 3 sont générés plus loin des autres parties de la tour de fibrage situées plus en amont, là où la fibre optique est plus sensible, que dans le cas où le dispositif de guidage mobile en translation est le dispositif de guidage amont 2. De plus, lesdites vibrations seront atténuées au niveau de la poulie 1 anti-PMD. Eviter ou atténuer la propagation de vibrations vers les parties amont de la tour de fibrage permet notamment d'améliorer la qualité de revêtement de la fibre optique 4. Dans le cas d'une amplitude importante des mouvements de translation du dispositif de guidage aval 3, le système anti-PMD comprend préférentiellement aussi un moyen de guidage supplémentaire de fibre optique, situé en aval du dispositif de guidage aval 3 par rapport au sens de défilement dd2 de la fibre optique 4 lors du fibrage de la fibre optique 4, de manière à absorber d'éventuelles vibrations.

L'autre dispositif de guidage mobile en translation est le dispositif de guidage amont 2, c'est-à-dire le dispositif de guidage, situé en amont de la poulie 1 anti-PMD par rapport au sens de défilement dd1 de la fibre optique lors du fibrage de la fibre optique. Dans ce cas, le système anti-PMD comprend aussi un moyen de guidage supplémentaire de fibre optique, situé en amont du dispositif de guidage amont par rapport au sens de défilement de la fibre optique 4 lors du fibrage de la fibre optique 4, quelque soit l'amplitude du mouvement en translation du dispositif de guidage amont 2, pour éviter la propagation, vers les parties amont de la tour de fibrage, d'éventuelles vibrations.

Dans l'invention, les deux dispositifs de guidage amont 2 et aval 3 sont mobiles en translation, préférentiellement selon la même direction de translation dt. Pour augmenter l'amplitude du couple de torsion appliqué à la fibre optique 4, les deux dispositifs de guidage se déplacent en sens contraire l'un de l'autre le long de ladite direction de translation dt. Lorsque le dispositif de guidage amont 2 se déplace dans le sens s1, le dispositif de guidage aval 3 se déplace dans le sens s2, et vice-versa. Ainsi, la surface de contact entre la surface 10 de la poulie 1 anti-PMD et la partie de la fibre optique 4 qui est angulairement décalée avec le plan PP de la poulie 1 anti-PMD est plus importante, ce qui permet, pour une même amplitude de mouvement en translation, de doubler le couple de torsion appliqué à la fibre optique 4. Il est aussi possible de commander indépendamment l'un de l'autre les dispositifs de guidage amont 2 et aval 3, de manière à obtenir des formes de profils de torsion imprimées dans la fibre optique 4 qui soient plus aléatoires ou tout au moins apériodiques au contraire des profils triangulaires ou sinusoïdaux.

La poulie 1 anti-PMD est de préférence une poulie de renvoi, c'est-à-dire que les directions de défilement de la fibre optique 4, dd1 en amont de la poulie 1 anti-PMD et dd2 en aval de la poulie 1 anti-PMD, sont perpendiculaires entre elles. La tour de fibrage comprend généralement une poulie de renvoi afin de diminuer la hauteur nécessaire de la tour de fibrage. Mais la poulie 1 anti-PMD peut aussi être située en aval de la poulie de renvoi par rapport au sens de défilement de la fibre optique 4 lors du fibrage de la fibre optique 4. Dans ce dernier cas, les vibrations se propageant vers les parties de la tour de fibrage situées en amont de la poulie de renvoi sont encore plus atténuées et la qualité de revêtement de la fibre optique 4 est encore améliorée ; l'inconvénient est la nécessité de rajouter une poulie sur la tour de fibrage. La poulie 1 anti-PMD doit bien sûr présenter une largeur au niveau de sa surface périphérique 10 qui soit suffisante pour permettre les excursions de la fibre optique 4 lorsque celle-ci roule sur la surface 10.

Dans un exemple numérique, pour une vitesse de fibrage de 600 m/min (mètres par minute) et pour une fréquence d'oscillation du mouvement de translation du dispositif de guidage aval 3 mobile en translation, le décalage angulaire entre plan PP de la poulie 1 anti-PMD et plan de la fibre optique 4 évoluait entre +13° et -13°, donnant alors dans la fibre optique 4 une de torsion appliquée valant environ 3 tours par mètre.

## Revendications

1. Système anti-PMD comprenant,
une poulie (1) anti-PMD sur laquelle une fibre optique (4) est destinée à rouler et qui est rotative autour d'un axe (ar) de rotation,
au moins deux dispositifs de guidage (2, 3) de fibre optique situés de part et d'autre de la poulie (1) anti-PMD,
l'axe (ar) de rotation de la poulie (1) anti-PMO est fixe,
le seul degré de liberté de la poulie (1) anti-PMD est la rotation autour de l'axe (ar) de rotation de la poulie (1) anti-PMD,
**caractérisé en ce que** les deux dispositifs de guidage (2, 3) sont mobiles en translation selon une direction de translation (dt) non orthogonale à l'axe (ar) de rotation de la poulie (1) anti-PMD.

2. Système anti-PMD selon la revendication 1,
**caractérisé en ce que**, lors du fibrage de la fibre optique (4),
les dispositives de guidage (2, 3) mobile en translation décalent angulairement la fibre optique (4) par rapport à un plan perpendiculaire (PP) à l'axe (ar) de rotation de la poulie (1) anti-PMD,
et la poulie (1) anti-PMD applique, alternativement dans le sens des aiguilles d'une montre et dans le sens inverse à celui des aiguilles d'une montre, un couple de torsion à la fibre optique (4) de manière à diminuer sa PMD.

3. Système anti-PMD selon la revendication 2, **caractérisé en ce que** ladite direction de translation (dt) des dispositives de guidage (2, 3) mobile en translation est située dans un plan parallèle à la fois à l'axe (ar) de rotation de la poulie (1) anti-PMD et à la direction de défilement (dd1, dd2) de la fibre optique (4) au niveau desdites dispositives de guidage (2, 3) lors du fibrage de la fibre optique (4).

4. Système anti-PMD selon l'une quelconque des revendications précédentes, **caractérisé en ce que** ladite direction de translation (dt) est parallèle à l'axe (or) de rotation de la poulie (1) anti-PMD.

5. Système anti-PMD selon l'une quelconque des revendications précédentes, **caractérisé en ce que** la distance, entre d'une part au moins un point de contact entre les dispositives de guidage (2, 3) mobile en translation et la fibre optique (4) et d'autre part au moins un point de contact entre la fibre optique (4) et la poulie (1) anti-PMD, est inférieure ou égale au rayon (R) de la poulie (1) anti-PMD.

6. Système anti-PMD selon la revendication 5, **caractérisé en ce que** la distance, entre d'une part au moins un point de contact entre les dispositives de guidage (2, 3) mobile en translation et la fibre optique (4) et d'autre part au moins un point de contact entre la fibre optique (4) et la poulie (1) anti-PMD, est inférieure ou égale à la moitié du rayon (R) de la poulie (1) anti-PMD.

7. Système anti-PMD selon l'une quelconque des revendications précédentes, **caractérisé en ce que** les dispositives de guidage (2, 3) mobile en translation comprennent chacun au moins deux doigts de guidage (21 et 22, 31 et 32) entre lesquels est destinée à passer la fibre optique (4) lors du fibrage de la fibre optique (4).

8. Système anti-PMD selon la revendication 7, **caractérisé en ce que** les doigts de guidage (21 et 22, 31 et 32) sont mobiles en rotation autour d'axes (23 et 24, 33 et 34) distincts entre eux.

9. Système anti-PMD selon l'une quelconque des revendications 7 à 8, **caractérisé en ce que** l'écartement des doigts de guidage (21 et 22, 31 et 32) est à la fois suffisamment important pour ne pas endommager le revêtement de la fibre optique (4) lors du fibrage de la fibre optique (4) et suffisamment faible pour maîtriser le déplacement angulaire entre le plan de la fibre optique (4) et le plan (PP) de la poulie (1) anti-PMD.

10. Système anti-PMD selon l'une quelconque des revendications 1 à 6, **caractérisé en ce que** les dispositives de guidage (2, 3) mobile en translation sont des poulie en V dont l'axe de rotation est parallèle à l'axe (ar) de rotation de la poulie (1) anti-PMD.

11. Système anti-PMD selon l'une quelconque des revendications précédentes, **caractérisé en ce que** le mouvement en translation des dispositives de guidage (2, 3) mobile en translation est beaucoup plus lent aux extrémités de la course dudit mouvement qu'au milieu de la course dudit mouvement de manière à imprimer dans la fibre optique (4) lors du fibrage plutôt un profil triangulaire de torsion qu'un profil sinusoïdal de torsion.

12. Système anti-PMD selon l'une quelconque des revendications précédentes, **caractérisé en ce que** le système anti-PMD comprend aussi un moyen de guidage supplémentaire de fibre optique, situé en aval du dispositif de guidage aval (3) par rapport au sens de défilement (dd2) de la fibre optique (4) lors du fibrage de la fibre optique (4).

13. Système anti-PMD, selon l'une quelconque des revendications précédentes, **caractérisé en ce que** les deux dispositifs de guidage (2, 3) se déplacent en sens contraire l'un de l'autre le long de ladite direction de translation (dt).

14. Système anti-PMD selon l'une quelconque des revendications précédentes, **caractérisé en ce que** la poulie (1) anti-PMD est une poulie de renvoi.

15. Système anti-PMD selon l'une quelconque des revendications 1 à 13, **caractérisé en ce que** le système anti-PMD comprend une poulie de renvoi, et **en ce que** la poulie (1) anti-PMD est située en aval de la poulie de renvoi par rapport au sens de défilement (dd2) de la fibre optique (4) lors du fibrage de la fibre optique (4).

## Claims

1. Anti-PMD system comprising
an anti-PMD pulley (1) over which an optical fibre (4) is intended to run and which is rotatable about an axis (ar) of rotation,
at least two optical-fibre-guiding devices (2, 3), located to one side and the other side of the anti-PMD pulley (1),
the axis (ar) of rotation of the anti-PMD pulley (1) being fixed,
the sole degree of freedom of the anti-PMD pulley (1) being rotation about the axis (ar) of rotation of the anti-PMD pulley (1),
**characterised in that** the two guiding devices (2, 3) are capable of translational movement in a translational direction (dt) which is not orthogonal to the axis (ar) of rotation of the anti-PMD pulley (1).

2. Anti-PMD system according to claim 1,
**characterised in that**, during drawing of the optical fibre (4),
the guiding devices (2, 3) capable of translational movement angularly offset the optical fibre (4) with respect to a plane perpendicular (PP) to the axis (ar) of rotation of the anti-PMD pulley (1),
and the anti-PMD pulley (1) applies, alternately in a clockwise direction and in an anticlockwise direction, a torsional moment to the optical fibre (4) so as to reduce its PMD.

3. Anti-PMD system according to claim 2, **characterised in that** said translational direction (dt) of the guiding devices (2, 3) capable of translational movement is located in a plane which is parallel both to the axis (ar) of rotation of the anti-PMD pulley (1) and to the running direction (dd1, dd2) of the optical fibre (4) at the level of said guiding devices (2, 3) during drawing of the optical fibre (4).

4. Anti-PMD system according to any one of the preceding claims, **characterised in that** said translational direction (dt) is parallel to the axis (ar) of rotation of the anti-PMD pulley (1).

5. Anti-PMD system according to any one of the preceding claims, **characterised in that** the distance between, on the one hand, at least one point of contact between the guiding devices (2, 3) capable of translational movement and the optical fibre (4) and, on the other hand, at least one point of contact between the optical fibre (4) and the anti-PMD pulley (1) is less than or equal to the radius (R) of the anti-PMD pulley (1).

6. Anti-PMD system according to claim 5, **characterised in that** the distance between, on the one hand, at least one point of contact between the guiding devices (2, 3) capable of translational movement and the optical fibre (4) and, on the other hand, at least one point of contact between the optical fibre (4) and the anti-PMD pulley (1) is less than or equal to half the radius (R) of the anti-PMD pulley (1).

7. Anti-PMD system according to any one of the preceding claims, **characterised in that** the guiding devices (2, 3) capable of translational movement each comprise at least two guiding fingers (21 and 22, 31 and 32) between which the optical fibre (4) is intended to pass during drawing of the optical fibre (4).

8. Anti-PMD system according to claim 7, **characterised in that** the guiding fingers (21 and 22, 31 and 32) are capable of rotational movement about axes (23 and 24, 33 and 34) which are different from one another.

9. Anti-PMD system according to any one of claims 7 to 8, **characterised in that** the spacing of the guiding fingers (21 and 22, 31 and 32) is simultaneously sufficiently large not to damage the coating of the optical fibre (4) during drawing of the optical fibre (4) and sufficiently small to control the angular displacement between the plane of the optical fibre (4) and the plane (PP) of the anti-PMD pulley (1).

10. Anti-PMD system according to any one of claims 1 to 6, **characterised in that** the guiding devices (2, 3) capable of translational movement are V-pulleys whose axis of rotation is parallel to the axis (ar) of rotation of the anti-PMD pulley (1).

11. Anti-PMD system according to any one of the preceding claims, **characterised in that** the translational movement of the guiding devices (2, 3) capable of translational movement is much slower at the extremities of the extent of said movement than in the middle of the extent of said movement so as to impart to the optical fibre (4), during fibre drawing, a triangular torsion profile rather than a sinusoidal torsion profile.

12. Anti-PMD system according to any one of the preceding claims, **characterised in that** the anti-PMD system also comprises an additional optical-fibre-guiding means located downstream of the downstream guiding device (3) relative to the running direction (dd2) of the optical fibre (4) during drawing of the optical fibre (4).

13. Anti-PMD system according to any one of the preceding claims, **characterised in that** the two guiding devices (2, 3) move in opposite senses to one another along said translational direction (dt).

14. Anti-PMD system according to any one of the preceding claims, **characterised in that** the anti-PMD pulley (1) is a return pulley.

15. Anti-PMD system according to any one of claims 1 to 13, **characterised in that** the anti-PMD system comprises a return pulley; and **in that** the anti-PMD pulley (1) is located downstream of the return pulley relative to the running direction (dd2) of the optical fibre (4) during drawing of the optical fibre (4).

## Patentansprüche

1. Anti-Polarisationsmodendispersion-System (PMD), das aufweist:
eine Anti-PMD-Rolle (1), auf der eine Lichtleitfaser (4) rollen soll und die um eine Drehachse (ar) drehbar ist, mindestens zwei Lichtleitfaser-Führungsvorrichtungen (2, 3), die sich zu beiden Seiten der Anti-PMD-Rolle (1) befinden,
wobei die Drehachse (ar) der Anti-PMD-Rolle (1) ortsfest ist,
wobei der einzige Freiheitsgrad der Anti-PMD-Rolle (1) die Drehung um die Drehachse (ar) der Anti-PMD-Rolle (1) ist,
**dadurch gekennzeichnet, dass** die zwei Führungsvorrichtungen (2, 3) gemäß einer Translationsrichtung (dt) nicht orthogonal zur Drehachse (ar) der Anti-PMD-Rolle (1) translationsbeweglich sind.

2. Anti-PMD-System nach Anspruch 1, **dadurch gekennzeichnet, dass** beim Ziehen der Lichtleitfaser (4)
die translationsbeweglichen Führungsvorrichtungen (2, 3) die Lichtleitfaser (4) winkelmäßig bezüglich einer Ebene (PP) lotrecht zur Drehachse (ar) der Anti-PMD-Rolle (1) versetzen,
und die Anti-PMD-Rolle (1) abwechselnd im Uhrzeigersinn und im Gegenuhrzeigersinn ein Torsionsmoment an die Lichtleitfaser (4) anwendet, um ihre PMD zu verringern.

3. Anti-PMD-System nach Anspruch 2, **dadurch gekennzeichnet, dass** die Translationsrichtung (dt) der translationsbeweglichen Führungsvorrichtungen (2, 3) sich beim Ziehen der Lichtleitfaser (4) in einer Ebene parallel sowohl zur Drehachse (ar) der Anti-PMD-Rolle (1) als auch zur Vorbeilaufrichtung (dd1, dd2) der Lichtleitfaser (4) in Höhe der Führungsvorrichtungen (2, 3) befindet.

4. Anti-PMD-System nach einem der vorhergehenden Ansprüche, **dadurch gekennzeichnet, dass** die Translationsrichtung (dt) parallel zur Drehachse (ar) der Anti-PMD-Rolle (1) ist.

5. Anti-PMD-System nach einem der vorhergehenden Ansprüche, **dadurch gekennzeichnet, dass** die Entfernung zwischen einerseits mindestens einem Kontaktpunkt zwischen den translationsbeweglichen Führungsvorrichtungen (2, 3) und der Lichtleitfaser (4) und andererseits mindestens einem Kontaktpunkt zwischen der Lichtleitfaser (4) und der Anti-PMD-Rolle (1) geringer als oder gleich dem Radius (R) der Anti-PMD-Rolle (1) ist.

6. Anti-PMD-System nach Anspruch 5, **dadurch gekennzeichnet, dass** die Entfernung zwischen einerseits mindestens einem Kontaktpunkt zwischen den translationsbeweglichen Führungsvorrichtungen (2, 3) und der Lichtleitfaser (4) und andererseits mindestens einem Kontaktpunkt zwischen der Lichtleitfaser (4) und der Anti-PMD-Rolle (1) geringer als die oder gleich der Hälfte des Radius (R) der Anti-PMD-Rolle (1) ist.

7. Anti-PMD-System nach einem der vorhergehenden Ansprüche, **dadurch gekennzeichnet, dass** die translationsbeweglichen Führungsvorrichtungen (2, 3) jede mindestens zwei Führungsfinger (21 und 22, 31 und 32) aufweisen, zwischen denen die Lichtleitfaser (4) beim Ziehen der Lichtleitfaser (4) durchgehen soll.

8. Anti-PMD-System nach Anspruch 7, **dadurch gekennzeichnet, dass** die Führungsfinger (21 und 22, 31 und 32) um Achsen (23 und 24, 33 und 34) drehbeweglich sind, die sich voneinander unterscheiden.

9. Anti-PMD-System nach einem der Ansprüche 7 bis 8, **dadurch gekennzeichnet, dass** der Abstand der Führungsfinger (21 und 22, 31 und 32) sowohl ausreichend groß ist, um die Umhüllung der Lichtleitfaser (4) beim Ziehen der Lichtleitfaser (4) nicht zu beschädigen, als auch klein genug ist, um die Winkelverschiebung zwischen der Ebene der Lichtleitfaser (4) und der Ebene (PP) der Anti-PMD-Rolle (1) zu beherrschen.

10. Anti-PMD-System nach einem der Ansprüche 1 bis 6, **dadurch gekennzeichnet, dass** die translationsbeweglichen Führungsvorrichtungen (2, 3) V-förmige Rollen sind, deren Drehachse parallel zur Drehachse (ar) der Anti-PMD-Rolle (1) ist.

11. Anti-PMD-System nach einem der vorhergehenden Ansprüche, **dadurch gekennzeichnet, dass** die Translationsbewegung der translationsbeweglichen Führungsvorrichtungen (2, 3) an den Enden des Hubs der Bewegung wesentlich langsamer ist als in der Mitte des Hubs der Bewegung, um der Lichtleitfaser (4) beim Ziehen eher ein dreieckiges Torsionsprofil als ein sinusförmiges Torsionsprofil zu verleihen.

12. Anti-PMD-System nach einem der vorhergehenden Ansprüche, **dadurch gekennzeichnet, dass** das Anti-PMD-System auch ein zusätzliches Führungsmittel für die Lichtleitfaser aufweist, das sich bezüglich der Vorbeilaufrichtung (dd2) der Lichtleitfaser (4) beim Ziehen der Lichtleitfaser (4) hinter der hinteren Führungsvorrichtung (3) befindet.

13. Anti-PMD-System nach einem der vorhergehenden Ansprüche, **dadurch gekennzeichnet, dass** die zwei Führungsvorrichtungen (2, 3) sich in Gegenrichtung zueinander entlang der Translationsrichtung (dt) verschieben.

14. Anti-PMD-System nach einem der vorhergehenden Ansprüche, **dadurch gekennzeichnet, dass** die Anti-PMD-Rolle (1) eine Umlenkrolle ist.

15. Anti-PMD-System nach einem der Ansprüche 1 bis 13, **dadurch gekennzeichnet, dass** das Anti-PMD-System eine Umlenkrolle aufweist, und dass die Anti-PMD-Rolle (1) sich bezüglich der Vorbeilaufrichtung (dd2) der Lichtleitfaser (4) beim Ziehen der Lichtleitfaser (4) hinter der Umlenkrolle befindet.
